# DEMANDE DE BREVET EUROPEEN

(11) **EP 0 690 636 A1**
(43) Date de publication de la demande: **03.01.1996**
(21) Numéro de dépôt: 95401511.1
(22) Date de dépôt: 26.06.1995
(51) Int. Cl.: H04Q 3/68, H04L 12/56, H04Q 11/04

(54) **Réseau extensible de commutation et système comprenant un tel réseau**

(30) Priorité: 29.06.1994 FR 9408021
(71) Demandeur: ALCATEL CIT, F-75008 Paris (FR)
(72) Inventeur: Frene, Patrick, F-92240 Malakoff (FR); Coutin, René, F-22700 Perros-Guirec (FR); Parmentier, Pierre, F-91400 Saclay (FR); Dieudonné, Marc, F-91430 Igny (FR)
(74) Mandataire: Sciaux, Edmond

(57) **Abrégé**

L'invention concerne un réseau de commutation permettant de relier entre eux une pluralité de liens bidirectionnels d'entrée/sortie.

Selon un mode de réalisation de l'invention, ce réseau comprend au moins deux noeuds (N1 à N3), chaque noeud possédant au maximum k points d'entrée/sortie incidents, k≧2, et n ensembles de k points d'entrée/sortie étendus, n≧2, et comprenant des moyens d'extension/concentration permettant de relier chacun des k points d'entrée/sortie incidents à un point d'entrée/sortie étendu de chacun des n ensembles, chaque lien bidirectionnel d'entrée/sortie pouvant être relié à un des points d'entrée/sortie incidents d'un desdits noeuds,
chaque noeud (N1 à N3) étant associé à une matrice de commutation bidirectionnelle (MB_{i,i}) à k entrées/sorties,
et lesdits noeuds (N1 à N3) étant reliés deux à deux, un premier et un second noeud quelconques étant reliés par une première (MM_{i,j}) et une seconde (MM_{j,i}) matrice de commutation monodirectionnelle à k entrées et k sorties.

## Description

Le domaine de l'invention est celui des réseaux de transmission de données, notamment numériques. Plus précisément, l'invention concerne un réseau de commutation permettant de relier entre eux une pluralité de liens bidirectionnels d'entrée/sortie, c'est-à-dire de liens capables de transporter des données à un débit prédéterminé et en duplex intégral.

Le réseau de l'invention a de nombreuses utilisations, telles que, par exemple, le support d'un trafic de cellules ATM (Asynchronous Transfer Mode en anglo-saxon).

Plus généralement, le réseau de l'invention peut être utilisé pour véhiculer n'importe quel type de données.

Traditionnellement, les réseaux de commutation sont constitués de plusieurs étages de matrices de commutation. Ces réseaux de commutation connus de l'état de la technique présentent de nombreux inconvénients.

Généralement, ils présentent un risque de blocage, c'est-à-dire un risque qu'un chemin ne puisse pas être trouvé entre deux liens bidirectionnels d'entrée/sortie qui possèdent tous deux la bande passante nécessaire à l'établissement d'une connexion donnée.

Si l'on désire éviter ce risque de blocage, les étages intermédiaires de ces réseaux connus doivent être nombreux et comprendre un nombre élevé de matrices de commutation et de liens entre ces matrices. Ces réseaux sont donc coûteux en matrices et en liens entre matrices.

Du fait du nombre élevé d'étages à traverser, le temps de commutation entre deux liens bidirectionnels d'entrée/sortie est long.

De plus, ces réseaux connus présentent un routage complexe du fait qu'il existe plusieurs chemins possibles entre deux liens bidirectionnels d'entrée/sortie.

Par ailleurs, pour supporter un déséquilibre de trafic, les réseaux connus nécessitent une répartition de ce trafic.

Enfin, la croissance des réseaux connus nécessite un recâblage au moins partiel des éléments constitutifs du réseau à accroître. En d'autres termes, les réseaux connus ne sont pas facilement extensibles.

L'invention a notamment pour objectif de pallier ces différents inconvénients de l'état de la technique.

Plus précisément, l'un des objectifs de la présente invention est de fournir un réseau de commutation qui soit économique en nombre de matrices et de liens entre matrices.

L'invention a également pour objectif de fournir un tel réseau qui présente un routage simple et qui soit sans blocage.

Un autre objectif de l'invention est de fournir un tel réseau qui présente des temps de traversée courts.

Un objectif complémentaire de l'invention est de fournir un tel réseau qui soit facilement extensible, sans nécessiter de recâblage de l'existant.

Ces différents objectifs, ainsi que d'autres qui apparaîtront par la suite, sont atteints selon l'invention à l'aide d'un réseau de commutation permettant de relier entre eux une pluralité de liens bidirectionnels d'entrée/sortie,
ledit réseau comprenant au moins deux noeuds, chaque noeud possédant au maximum k points d'entrée/sortie incidents, k ≧ 2, et n ensembles de k points d'entrée/sortie étendus, n ≧ 2, et comprenant des moyens d'extension/concentration permettant de relier chacun des k points d'entrée/sortie incidents à un point d'entrée/sortie étendu de chacun des n ensembles, chaque lien bidirectionnel d'entrée/sortie pouvant être relié à un des points d'entrée/sortie incidents d'un desdits noeuds,
chaque noeud étant associé à une matrice de commutation bidirectionnelle à k entrées/sorties, chacune des k entrées/sorties d'une matrice de commutation bidirectionnelle donnée étant reliée par un lien bidirectionnel intermédiaire à un des k points d'entrée/sortie étendus d'un même ensemble du noeud associé à ladite matrice de commutation bidirectionnelle donnée,
et lesdits noeuds étant reliés deux à deux, un premier et un second noeud quelconques étant reliés par une première et une seconde matrice de commutation monodirectionnelle à k entrées et k sorties,
chacune des k entrées, respectivement sorties, de la première matrice de commutation monodirectionnelle étant reliée, par un lien monodirectionnel intermédiaire, à un des k points d'entrée/sortie étendus d'un ensemble donné du premier, respectivement second, noeud quelconque,
chacune des k entrées, respectivement sorties, de la seconde matrice de commutation monodirectionnelle étant reliée, par un lien monodirectionnel intermédiaire, à un des k points d'entrée/sortie étendus dudit ensemble donné du second, respectivement premier, noeud quelconque.

Ainsi, chacun des k points d'entrée/sortie incidents est relié à n points d'entrée/sortie étendus: n est l'ordre d'extension de chacun des k points d'entrée/sortie incidents. Par matrice de commutation bidirectionnelle à k entrées/sorties, on entend une matrice "repliée" telle que chacune de ses k entrées/sorties peut être reliée à l'une quelconque des k entrées/sorties.

De même, par matrice de commutation monodirectionnelle à k entrées et k sorties, on entend une matrice "dépliée" telle chacune de ses entrées peut être reliée à l'une quelconque de ses k sorties.

Le réseau de l'invention est tel qu'il existe un seul chemin entre deux liens bidirectionnels d'entrée/sortie quelconques. En d'autres termes, le routage est très simple et le réseau est sans blocage.

Chaque chemin entre deux liens bidirectionnels d'entrée/sortie n'emprunte qu'une matrice de commutation (à savoir une matrice bidirectionnelle (pour les deux sens) si les deux liens bidirectionnels d'entrée/sortie sont reliés à un même noeud, ou bien une matrice monodirectionnelle (différente dans chaque sens) s'ils sont reliés à deux noeuds distincts). Par conséquent, le temps de traversée est très court (et équivalent au temps de traversée de deux étages "classiques" de matrices de commutation). Le nombre de matrices de commutation et de liens intermédiaires (qui sont soit des liens bidirectionnels entre une matrice bidirectionnelle et un noeud, soit des liens monodirectionnels entre une matrice monodirectionnelle et un noeud) est réduit. Le réseau de l'invention présente donc un coût plus faible que les réseaux "classiques" à étages.

Le réseau de l'invention peut également supporter un déséquilibre de trafic sans que ce trafic soit préalablement réparti.

Selon une variante de l'invention, le réseau de commutation comprend au moins deux noeuds, chaque noeud possédant k' points d'entrée/sortie incidents, k' ≧ 2, et n ensembles de k' points d'entrée/sortie étendus, n ≧ 1, et comprenant des moyens d'extension/concentration permettant de relier chacun des k' points d'entrée/sortie incidents à un point d'entrée/sortie étendus de chacun des n ensembles, chaque lien bidirectionnel d'entrée/sortie pouvant être relié à un des points d'entrée/sortie incidents d'un desdits noeuds,
lesdits noeuds étant reliés deux à deux, un premier et un second noeud quelconques étant reliés par une matrice de commutation bidirectionnelle à 2.k' entrées/sorties,
k' premières entrées/sorties de la matrice de commutation bidirectionnelle étant chacune reliées, par un lien bidirectionnel intermédiaire, à un des k' points d'entrée/sortie étendus d'un ensemble donné du premier noeud quelconque,
k' secondes entrées/sorties de la matrice de commutation bidirectionnelle étant chacune reliées, par un lien bidirectionnel intermédiaire, à un des k' points d'entrée/sortie étendus d'un ensemble donné du second noeud quelconque.

Ainsi, dans cette variante, le réseau ne comprend qu'un seul type de matrice de commutation, à savoir des matrices bidirectionnelles.

Cette variante présente les mêmes avantages que le réseau de l'invention décrit précédemment (pas de blocage, temps de traversée court).

Toutefois, en ce qui concerne le nombre de matrices et de liens intermédiaires, cette variante est moins avantageuse car il existe une redondance. En effet, entre deux liens bidirectionnels d'entrée/sortie, il existe :
- un seul chemin s'ils sont reliés à deux points d'entrée/sortie incidents de deux noeuds distincts;
- plusieurs chemins s'ils sont reliés à deux points d'entrée/sortie incidents d'un même noeud. Il existe en effet dans ce cas autant de chemins possibles que d'extensions (à savoir n') puisque chacun des n couples de points d'entrée/sortie étendus correspondant aux deux points d'entrée/sortie incidents peut voir ses deux éléments reliés par une matrice de commutation bidirectionnelle distincte.

L'invention concerne également un système d'au moins deux réseaux de commutation interconnectés, au moins un desdits réseaux étant un réseau selon l'invention, lesdits réseaux étant interconnectés par l'intermédiaire d'au moins un lien bidirectionnel d'entrée/sortie.

Le réseau selon l'invention est par exemple utilisé pour véhiculer des cellules ATM. Toutefois, il est clair que le réseau de l'invention peut véhiculer n'importe quel type de données.

L'invention concerne aussi un procédé de croissance d'un tel réseau, permettant de relier des liens bidirectionnels d'entrée/sortie supplémentaires d'une part entre eux et d'autre part aux liens bidirectionnels d'entrée/sortie déjà reliés audit réseau.

Dans le cas du réseau selon l'invention décrit en premier, le procédé de croissance comprend :
- un noeud supplémentaire, chaque point d'entrée/sortie incident dudit noeud supplémentaire pouvant être relié à un des liens bidirectionnels d'entrée/sortie supplémentaires,
- une matrice de commutation bidirectionnelle supplémentaire associée audit noeud supplémentaire,
- entre ledit noeud supplémentaire et chaque noeud déjà existant, une première et une seconde matrice de commutation monodirectionnelle supplémentaire.

Dans le cas de la variante du réseau selon l'invention, ce procédé de croissance comprend :
- un noeud supplémentaire, chaque point d'entrée/sortie incident dudit noeud supplémentaire pouvant être relié à un des liens bidirectionnels d'entrée/sortie supplémentaires,
- entre ledit noeud supplémentaire et chaque noeud déjà existant, une matrice de commutation bidirectionnelle supplémentaire.

Par conséquent, dans les deux cas, la croissance du réseau ne nécessite aucun recâblage de l'existant.

D'autres caractéristiques et avantages de l'invention apparaîtront à la lecture de la description suivante de deux modes de réalisation préférentiels de l'invention, donnés à titre d'exemple indicatif et non limitatif, et des dessins annexés, dans lesquels :
- les figures 1 et 2 présentent chacune, de façon schématique, un exemple distinct d'un mode de réalisation d'un réseau de commutation selon l'invention;
- la figure 3 présente de façon simplifiée un noeud du type apparaissant sur les figures 1 et 2;
- la figure 4 présente de façon simplifiée une matrice de commutation monodirectionnelle du type apparaissant sur les figures 1 et 2;
- la figure 5 présente de façon simplifiée une matrice de commutation bidirectionnelle du type apparaissant sur les figures 1 et 2;
- la figure 6 présente le principe de croissance d'un réseau selon l'invention du type du premier mode de réalisation présenté sur la figure 1 ;
- la figure 7 présente le principe de croissance d'un réseau selon l'invention du type du second mode de réalisation présenté sur la figure 2 ; et
- la figure 8 présente un exemple de système selon l'invention de réseaux de commutation interconnectés.

L'invention concerne donc un réseau de commutation permettant de relier entre eux une pluralité de liens bidirectionnels d'entrée/sortie. La suite de la description concerne deux modes de réalisation.

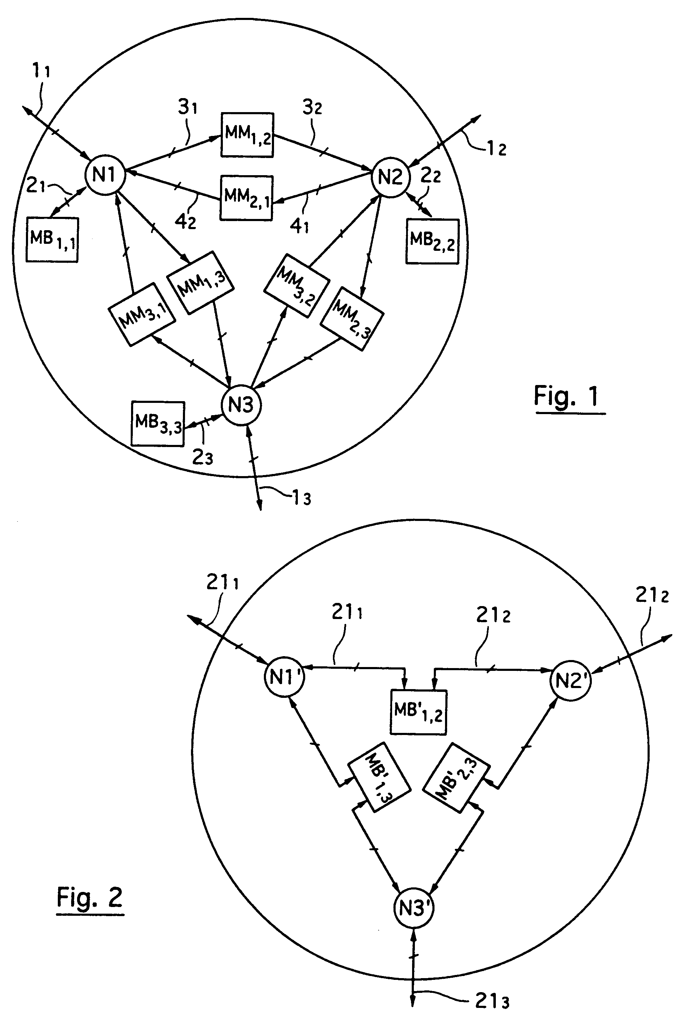

Dans le premier mode de réalisation, dont un exemple à trois noeuds est présenté de façon schématique sur la figure 1, le réseau de commutation de l'invention comprend notamment :
- des noeuds N1 à N3,
- des matrices de commutation bidirectionnelles MB_{1,1}, MB_{2,2}, MB_{3,3},
- des matrices de commutation monodirectionnelles MM_{1,2}, MM_{2,1}, MM_{1,3}, MM_{3,1}, MM_{2,3}, MM_{3,2}.

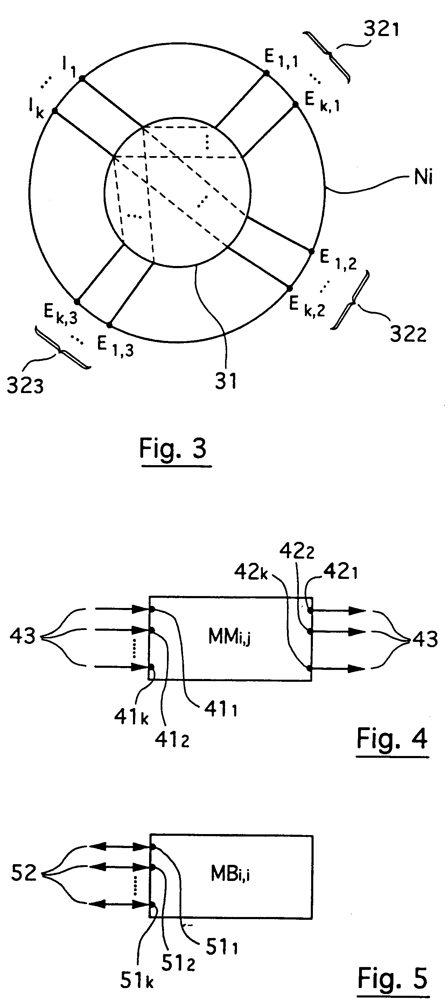

La figure 3 présente un exemple de noeud Nᵢ du type apparaissant sur la figure 1. Ce noeud possède au maximum :
- k points d'entrée/sortie incidents I₁ à Iₖ (avec k ≧ 2), et
- n ensembles 32, par exemple de 32₁ à 32₃, de k points d'entrée/sortie étendus E_{1,1} à E_{k,1}, E_{1,2} à E_{k,2}, E_{1,3} à E_{k,3} (avec n ≧ 2). Dans l'exemple présenté, on a n = 3.

De plus, ce noeud Nᵢ comprend des moyens 31 d'extension / concentration permettant de relier chacun des k points d'entrée/sortie incidents à un point d'entrée/sortie étendu de chacun des n ensembles 32₁ à 32₃ (soit à n points d'entrée/sortie étendus, c'est pourquoi n est également appelé "ordre d'extension").

La figure 4 présente de façon simplifiée une matrice de commutation monodirectionnelle MM_{i,j} du type apparaissant sur la figure 1.

Une telle matrice monodirectionnelle MM_{i,j} possède k entrées 41₁ à 41ₖ et k sorties 42₁ à 42ₖ. Chaque entrée 41₁ à 41ₖ peut être commutée sur n'importe quelle sortie 42₁ à 42ₖ. Chacune des entrées et des sorties est reliée à un lien monodirectionnel intermédiaire 43.

La figure 5 présente de façon simplifiée une matrice de commutation bidirectionnelle MB_{i,i} du type apparaissant sur la figure 1.

Une telle matrice bidirectionnelle MB_{i,i} possède k entrées/sorties 51₁ à 51ₖ. Chaque entrée/sortie 51₁ à 51ₖ peut être commutée à n'importe quelle autre entrée/sortie. Chacune des entrées/sorties est reliée à un lien bidirectionnel intermédiaire 52.

La structure du réseau selon le premier mode de réalisation est maintenant précisée.

Chaque noeud N1 à N3 peut recevoir un groupe 1₁ à 1₃ de k liens bidirectionnels d'entrée/sortie, chacun des liens bidirectionnels d'entrée/sortie d'un groupe 1₁ à 1₃ étant relié à un des points d'entrée/sortie incidents I₁ à Iₖ d'un des noeuds N1 à N3.

De plus, chaque noeud N1 à N3 est associé à une matrice de commutation bidirectionnelle MB_{1,1} à MB_{3,3} à k entrées/sorties par un groupe 2₁ à 2₃ de liens bidirectionnels intermédiaires 52. Chacune des k entrées/sorties 51₁ à 51ₖ d'une matrice de commutation bidirectionnelle MB_{1,1} à MB_{3,3} est reliée, par un des liens bidirectionnels intermédiaires 52 d'un groupe 2₁ à 2₃, à un des k points d'entrée/sortie étendus E_{1,1} à E_{k,1}, E_{1,2} à E_{k,2}, E_{1,3} à E_{k,3} d'un même ensemble 32 du noeud N1 à N3 associée à cette matrice MB_{1,1} à MB_{3,3}.

Enfin, les noeuds N1 à N3 sont reliés deux à deux. On décrit ci-dessous la liaison entre les noeuds référencés N1 et N2. Il est clair que les autres laisons entre deux noeuds sont du même type.

Les noeuds N1 et N2 sont reliés par :
- dans le sens N1 vers N2 : un premier groupe 3₁ de liens monodirectionnels intermédiaires 43, une première matrice de commutation monodirectionnelle MM_{1,2}, et un second groupe 3₂ de liens monodirectionnels intermédiaires 43 ;
- dans le sens N2 vers N1 : un troisième groupe 4₁ de liens monodirectionnels intermédiaires 43, une seconde matrice de commutation monodirectionnelle MM_{2,1}, et un quatrième groupe 4₂ de liens monodirectionnels intermédiaires 43.

Chacune des k entrées 41₁ à 41ₖ, respectivement sorties 42₁ à 42ₖ, de la première matrice de commutation monodirectionnelle MM_{1,2} est reliée, par un lien monodirectionnel intermédiaire 43 du premier 3₁, respectivement second 3₂, groupe, à un des k points d'entrée/sortie étendus E_{1,1} à E_{k,1} d'un ensemble 32 du premier N1, respectivement second N2, noeud.

Chacune des k entrées 41₁ à 41ₖ, respectivement sorties 42₁ à 42ₖ, de la seconde matrice de commutation monodirectionnelle MM_{2,1} est reliée, par un lien monodirectionnel intermédiaire 43 du premier 4₁, respectivement second 4₂, groupe, à un des k points d'entrée/sortie étendus E_{1,1} à E_{k,1} de l'ensemble 32 précité du second N2, respectivement premier N1 noeud.

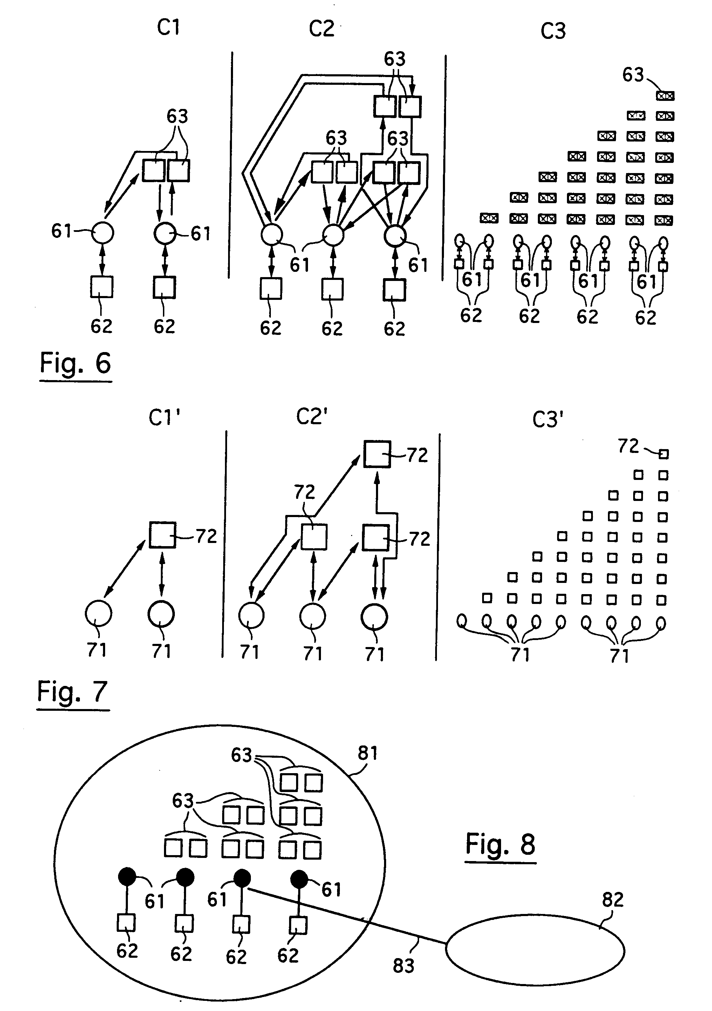

La figure 6 présente le principe de croissance d'un réseau de l'invention selon le premier mode de réalisation. On a représenté trois configurations C1 à C3 correspondant aux cas où le réseau comprend respectivement 2, 3, et 8 noeuds. Dans un souci de simplification, les groupes de liens bidirectionnels d'entrée/sortie (reliés chacun à un des noeuds) n'ont pas été représentés sur la figure 6.

Dans la première configuration C1, le réseau comprend deux noeuds 61, deux matrices bidirectionnelles 62, et une paire 63 de première et seconde matrices monodirectionnelles.

Dans la seconde configuration C2, le réseau comprend trois noeuds 61, trois matrices bidirectionnelles 62, et trois paires 63 de première et seconde matrices monodirectionnelles.

Ainsi, lorsqu'on désire augmenter de k le nombre de liens bidirectionnels d'entrée/sortie du réseau, comme c'est le cas entre les première et seconde configurations C1, C2, on ajoute :
- un noeud 61 ;
- une matrice de commutation bidirectionnelle 62, associée au noeud ajouté ; et
- entre le second noeud ajouté et chaque noeud existant, une paire 63 de première et seconde matrices monodirectionnelles.

La capacité maximale du réseau, en nombre de liens bidirectionnels d'entrée/sortie, est k.n, avec :
- k le nombre de points d'entrée/sortie incidents I₁ à Iₖ de chaque noeud 61,
- n l'ordre d'extension. Dans ce premier mode de réalisation, l'ordre d'extension est aussi égal au nombre maximal de noeuds.

Par exemple, si n = 8, la troisième configuration C3 correspond à la configuration maximale.

La figure 8 présente un système comprenant deux réseaux 81, 82 interconnectés. Un de ces réseaux 81 est un réseau tel que décrit précédemment (premier mode de réalisation). L'autre réseau 82 est un réseau quelconque. Les deux réseaux 81, 82 sont interconnectés par au moins un lien bidirectionnel d'entrée/sortie 83.

Dans le second mode de réalisation, dont un exemple à trois noeuds est présenté de façon schématique sur la figure 2, le réseau de commutation de l'invention comprend notamment :
- des noeuds N1' à N3',
- des matrices de commutation bidirectionnelles MB_{1,2}', MB_{1,3}', MB_{2,3}'.

Les noeuds N1' à N3' sont du type présenté auparavant en relation avec la figure 3, avec k' au lieu de k.

Les matrices de commutation bidirectionnelles MB_{1,2}', MB_{1,3}', MB_{2,3}' sont du type présenté auparavant en relation avec la figure 5, avec 2k' au lieu de k.

La structure du réseau selon le second mode de réalisation est maintenant précisée.

Chaque noeud N1' à N3' peut recevoir un groupe 21₁ à 21₃ de k' liens bidirectionnels d'entrée/sortie, chacun des k' liens bidirectionnels d'entrée/sortie étant relié à un des points d'entrée/sortie d'un groupe 21₁ à 21₃ d'un noeud N1' à N3'.

De plus, les noeuds N1' à N3' sont reliés deux à deux. On décrit ici uniquement la liaison entre les noeuds référencés N1' et N2', les autres liaisons entre deux noeuds étant du même type.

Les noeuds N1' et N2' sont reliés par un premier groupe 21₁ de k' liens bidirectionnels intermédiaires 52, une matrice de commutation bidirectionnelle MB_{1,2}' (à 2.k' entrées et 2.k' sorties), et un second groupe 21₂ de liens bidirectionnels intermédaires 52.

k' premières entrées/sorties 51ᵢ, avec i ∈ [1, k'] de la matrice bidirectionnelle MB_{1,2}' sont chacune reliées, par un lien bidirectionnel intermédiaire 52 du premier groupe 21₁, à un des k' points d'entrée/sortie étendus E_{i,1} avec i ∈ [1, k'], d'un ensemble 32 du premier noeud N1'.

k' secondes entrées/sorties 51ᵢ avec i ∈ [k'+1, 2k'] de la matrice bidirectionnelle MB_{1,2}' sont chacune reliées, par un lien bidirectionnel intermédiaire 52 du second groupe 21₂, à un des k' points d'entrée/sortie étendus E_{i,1} avec i ∈ [1, k'], d'un ensemble 32 du second noeud N2'.

La figure 7 présente le principe de croissance d'un réseau de l'invention selon le second mode de réalisation. On a représenté trois configurations C1' à C3' correspondant aux cas où le réseau comprend respectivement 2, 3 et 9 noeuds. Dans un souci de simplification, de même que sur la figure 6, les groupes de liens bidirectionnels d'entrée/sortie (reliés chacun à un des noeuds) n'ont pas été représentés.

Dans la première configuration C1', le réseau comprend deux noeuds 71 et une matrice bidirectionnelle 72.

Dans la seconde configuration C2', le réseau comprend trois noeuds 71 et trois matrices bidirectionnelles 72.

Ainsi, lorsqu'on désire augmenter de k' le nombre de liens bidirectionnels d'entrée/sortie du réseau, comme c'est le cas entre les première et seconde configurations C1' et C2', on ajoute :
- un noeud 71 ; et
- entre le noeud ajouté et chaque noeud existant, une matrice de commutation bidirectionnelle 72.

La capacité maximale du réseau, en nombre de liens bidirectionnels d'entrée/sortie, est k'. (n+1), avec :
- k' le nombre de points d'entrée/sortie incidents de chaque noeud 71,
- n l'ordre d'extension. Dans ce second mode de réalisation, le nombre maximal de noeuds est n+1.

Par exemple, si n = 8, la troisième configuration C3' correspond à la configuration maximale.

De même que le réseau du premier mode de réalisation, le réseau du second mode de réalisation peut être interconnecté avec n'importe quel type de réseau.

Il est à noter que les premier et second modes de réalisation sont basés sur le même principe d'extension/concentration des points d'entrée/sortie incidents, et diffèrent simplement sur la façon de relier les noeuds deux à deux.

Il est clair que l'invention concerne également le cas où les noeuds possèdent un nombre variable de points d'entrée/sortie incidents et où l'ordre d'extension est variable, au sein d'un même noeud, pour chaque point d'entrée/sortie incident.

Dans ce cas, le réseau reste sans blocage et le routage est toujours unique. Par contre, la connectivité totale du réseau n'est pas obligatoirement assurée, et la croissance du réseau n'obéit plus aux mêmes règles que celles présentées précédemment.

## Revendications

1. Réseau de commutation permettant de relier entre eux une pluralité de liens bidirectionnels d'entrée/sortie,
caractérisé en ce qu'il comprend au moins deux noeuds (N1 à N3 ; 61), chaque noeud possédant au maximum k points d'entrée/sortie incidents (I₁ à Iₖ), k ≧ 2, et n ensembles (32₁ à 32₃) de k points d'entrée/sortie étendus (E_{1,1} à E_{k,3}), n ≧ 2, et comprenant des moyens (31) d'extension/concentration permettant de relier chacun des k points d'entrée/sortie incidents à un point d'entrée/sortie étendu de chacun des n ensembles, chaque lien bidirectionnel d'entrée/sortie pouvant être relié à un des points d'entrée/sortie incidents d'un desdits noeuds,
en ce que chaque noeud (N1 à N3) est associé à une matrice de commutation bidirectionnelle (MB_{i,i} ; 62) à k entrées/sorties, chacune des k entrées/sorties (51₁ à 51ₖ) d'une matrice de commutation bidirectionnelle donnée étant reliée par un lien bidirectionnel intermédiaire (52) à un des k points d'entrée/sortie étendus d'un même ensemble (32₁ à 32₃) du noeud associé à ladite matrice de commutation bidirectionnelle donnée,
et en ce que lesdits noeuds (N1 à N3) sont reliés deux à deux, un premier et un second noeud quelconques étant reliés par une première (MM_{i,j} ; 63) et une seconde (MM_{j,i} ; 63) matrice de commutation monodirectionnelle à k entrées (41₁ à 41ₖ) et k sorties (42₁ à 42ₖ),
chacune des k entrées, respectivement sorties, de la première matrice de commutation monodirectionnelle étant reliée, par un lien monodirectionnel intermédiaire (43), à un des k points d'entrée/sortie étendus d'un ensemble donné (32) du premier, respectivement second, noeud quelconque,
chacune des k entrées, respectivement sorties, de la seconde matrice de commutation monodirectionnelle étant reliée, par un lien monodirectionnel intermédiaire (43), à un des k points d'entrée/sortie étendus dudit ensemble donné (32) du second, respectivement premier, noeud quelconque.

2. Réseau de commutation permettant de relier entre eux une pluralité de liens bidirectionnels d'entrée/sortie,
caractérisé en ce qu'il comprend au moins deux noeuds (N1' à N3' ; 71), chaque noeud possédant k' points d'entrée/sortie incidents (I₁ à I_{k'}), k' ≧ 2, et n ensembles (32₁ à 32₃) de k' points d'entrée/sortie étendus (E_{1,1} à E_{k,3}), n ≧ 1, et comprenant des moyens (31) d'extension/concentration permettant de relier chacun des k' points d'entrée/sortie incidents à un point d'entrée/sortie étendus de chacun des n ensembles, chaque lien bidirectionnel d'entrée/sortie pouvant être relié à un des points d'entrée/sortie incidents d'un desdits noeuds,
et en ce que lesdits noeuds (N1' à N3') sont reliés deux à deux, un premier et un second noeud quelconques étant reliés par une matrice de commutation bidirectionnelle (MB_{i,j}' ; 72) à 2.k' entrées/sorties,
k' premières entrées/sorties de la matrice de commutation bidirectionnelle étant chacune reliées, par un lien bidirectionnel intermédiaire (43), à un des k' points d'entrée/sortie étendus d'un ensemble donné du premier noeud quelconque,
k' secondes entrées/sorties de la matrice de commutation bidirectionnelle étant chacune reliées, par un lien bidirectionnel intermédiaire (43), à un des k' points d'entrée/sortie étendus d'un ensemble donné du second noeud quelconque.

3. Système d'au moins deux réseaux de commutation interconnectés, caractérisé en ce qu'au moins un desdits réseaux est un réseau selon l'une quelconque des revendications 1 et 2, lesdits réseaux étant interconnectés par l'intermédiaire d'au moins un lien bidirectionnel d'entrée/sortie (83).

4. Utilisation du réseau selon l'une quelconque des revendications 1 et 2 pour véhiculer des cellules ATM.

5. Procédé de croissance d'un réseau selon la revendication 1, de façon à pouvoir relier des liens bidirectionnels d'entrée/sortie supplémentaires d'une part entre eux et d'autre part aux liens bidirectionnels d'entrée/sortie déjà reliés audit réseau, caractérisé en ce qu'il comprend les étapes d'ajout de :
- un noeud supplémentaire (61), chaque point d'entrée/sortie incident dudit noeud supplémentaire pouvant être relié à un des liens bidirectionnels d'entrée/sortie supplémentaires,
- une matrice de commutation bidirectionnelle supplémentaire (62) associée audit noeud supplémentaire,
- entre ledit noeud supplémentaire et chaque noeud déjà existant, une première et une seconde matrice de commutation monodirectionnelle supplémentaire (63).

6. Procédé de croissance d'un réseau selon la revendication 2, de façon à pouvoir relier des liens bidirectionnels d'entrée/sortie supplémentaires d'une part entre eux et d'autre part aux liens bidirectionnels d'entrée/sortie déjà reliés audit réseau,
caractérisé en ce qu'il comprend les étapes d'ajout de :
- un noeud supplémentaire (71), chaque point d'entrée/sortie incident dudit noeud supplémentaire pouvant être relié à un des liens bidirectionnels d'entrée/sortie supplémentaires,
- entre ledit noeud supplémentaire et chaque noeud déjà existant, une matrice de commutation bidirectionnelle supplémentaire (72).
